# EUROPEAN PATENT APPLICATION

(11) **EP 4 282 677 A1**
(43) Date of publication of application: **29.11.2023**
(21) Application number: 23175509.1
(22) Date of filing: 25.05.2023
(51) Int. Cl.: B60H 1/00, B60H 1/22

(54) **VEHICULAR AIR CONDITIONER**

(30) Priority: 27.05.2022 JP 2022086493
(71) Applicant: VALEO SYSTEMES THERMIQUES, 78320 Le Mesnil Saint-Denis (FR)
(72) Inventor: NAGANO, Hideki, Kumagaya-shi, 360-0193 (JP)
(74) Representative: Valeo Systèmes Thermiques

(57) **Abstract**

The disclosure is to eliminate a temperature irregularity of air distributed from an outlet of a heating flow path to discharge ports in a vehicular air conditioner including a sliding mixing door.

A vehicular air conditioner (10; 100; 200; 300) includes: a housing (42) provided with an air flow path (41) inside; an evaporator (43) provided in the air flow path; a heater unit (44) provided downstream of the evaporator (43); a partition wall (47) that partitions the air flow path (41) into a heating flow path (45) and a cold air flow path (46); and a sliding mixing door (48, 248) disposed at a downstream distal end (47a) of the partition wall (47). The heater unit (44) is set to have a temperature distribution in which a heating temperature (T3) of a portion (71) closer to a boundary (Bd) between the downstream distal end (47a) of the partition wall (47) and the mixing door (48, 248) is higher than a heating temperature (T1, T2) of a portion (72, 73) farther from the boundary (Bd).

## Description

### BACKGROUND OF THE INVENTION

### 1. Technical Field

The present invention relates to a technique for improving a vehicular air conditioner.

### 2. Background Art

Vehicular air conditioners include a type in which a ratio of air flowing toward a heating flow path to air flowing toward a cold air flow path is adjusted by a sliding mixing door (see, for example, Patent Literature 1).

A vehicular air conditioner known from Patent Literature 1 includes: a cooler that is provided in an air flow path in a case and cools air; and a heater that is provided downstream of the cooler and heats air. A heating flow path including the heater and a cold air flow path bypassing the heater are partitioned by a partition wall. A mixing door is provided at a distal end of the partition wall. The mixing door has a configuration of a sliding door, and adjusts a ratio of air flowing toward the heating flow path to air flowing toward the cold air flow path.

Patent Literature 1: JP-A-2021-062725

### SUMMARY OF THE INVENTION

However, in the vehicular air conditioner known from Patent Literature 1, a gap is provided between the distal end of the partition wall and the mixing door. In a state in which the cold air flow path is fully closed by the mixing door, that is, in a so-called full-hot mode or a state close to the fully closed state, cold air flowing through the cold air flow path flows into an outlet of the heating flow path through the gap. In this case, a part of air heated by the heater is cooled by cold air. In particular, a decrease in a temperature of air closer to a position of the gap is inevitably large. As a result, a temperature difference of air distributed from the heating flow path to discharge ports becomes large. For example, a defroster discharge portion capable of blowing air toward a windshield is close to the position of the gap. A temperature of air discharged from the defroster discharge portion tends to be lower than a temperature of air discharged from the other discharge ports. In order to enhance comfort of a passenger in a vehicle interior, it is required to eliminate a temperature irregularity of air as much as possible.

Therefore, an object is to provide a vehicular air conditioner capable of eliminating a temperature irregularity of air distributed from an outlet of a heating flow path to discharge ports.

In the following description, reference numerals in the accompanying drawings are appended in parentheses to facilitate understanding of the invention, but the invention is not limited to illustrated embodiments.

According to the invention, a first aspect provides a vehicular air conditioner (10; 100; 200; 300), including: a housing (42) provided with an air flow path (41) inside; an evaporator (43) provided in the air flow path (41); a heater unit (44) provided downstream of the evaporator (43); a partition wall (47) that partitions the air flow path (41) into a heating flow path (45) including the heater unit (44) and a cold air flow path (46) bypassing the heater unit (44); and a mixing door (48, 248) having a configuration of a sliding door disposed at a downstream distal end (47a) of the partition wall (47), the mixing door (48, 248) being configured to adjust a ratio of air flowing toward the heating flow path (45) to air flowing toward the cold air flow path (46), in which
the heater unit (44) is set to have a temperature distribution in which a heating temperature (T3) of a portion (71) closer to a boundary (Bd) between the downstream distal end (47a) of the partition wall (47) and the mixing door (48, 248) is higher than a heating temperature (T1, T2) of a portion (72, 73) farther from the boundary (Bd).

In a second aspect, preferably, the vehicular air conditioner according to the first aspect further includes at least one cold air guide path (310) extending from the downstream distal end (47a) of the partition wall (47) toward an end (45b) of an outlet (45a) of the heating flow path (45) opposite to the downstream distal end (47a), the cold air guide path (310) being configured to guide cold air, flowing through the boundary (Bd) into the cold air guide path (310), to the end (45b) opposite to the downstream distal end (47a), in which
the cold air guide path (310) is open toward a downstream side of the heating flow path (45).

According to the invention, a temperature irregularity of air distributed from an outlet of a heating flow path to discharge ports can be eliminated in a vehicular air conditioner including a sliding mixing door.

### BRIEF DESCRIPTION OF THE DRAWINGS

Fig. 1 is a cross-sectional view illustrating a vehicular air conditioner according to a first embodiment.
Fig. 2 is a partially omitted perspective view of a mixing door illustrated in Fig. 1.
Fig. 3 is a cross-sectional view illustrating a relation between a downstream distal end of a partition wall and the mixing door illustrated in Fig. 1.
Fig. 4 is a diagram illustrating a temperature distribution of a heating temperature of a heater unit illustrated in Fig. 1.
Fig. 5A is a diagram illustrating a full-hot mode state of the vehicular air conditioner illustrated in Fig. 1. Fig. 5B is a diagram illustrating a half-mode state of the vehicular air conditioner illustrated in Fig. 1. Fig. 5C is a diagram illustrating a full-cool mode state of the vehicular air conditioner illustrated in Fig. 1.
Fig. 6 is a cross-sectional view illustrating a vehicular air conditioner according to a second embodiment.
Fig. 7 is a cross-sectional view illustrating a relation between a downstream distal end of a partition wall and a mixing door in a vehicular air conditioner according to a third embodiment.
Fig. 8 is a partially omitted perspective view of the mixing door illustrated in Fig. 7.
Fig. 9A is a first example diagram illustrating a case in which a ventilation introduction recess illustrated in Fig. 7 has an arc-shaped cross section. Fig. 9B is a second example diagram illustrating a case in which the ventilation introduction recess illustrated in Fig. 7 has a trapezoidal cross section. Fig. 9C is a third example diagram illustrating a case in which the ventilation introduction recess illustrated in Fig. 7 has a tapered cross section.
Fig. 10 is a cross-sectional view illustrating a relation among a downstream distal end of a partition wall, a mixing door, and a cold air guide path in a vehicular air conditioner according to a fourth embodiment.
Fig. 11 is a perspective view illustrating the relation among the downstream distal end of the partition wall, the mixing door, and the cold air guide path illustrated in Fig. 10.

### DESCRIPTION OF THE PREFERRED EMBODIMENTS

Embodiments of the invention will be described below based on the accompanying drawings. The embodiments illustrated in the accompanying drawings are examples of the invention, and the invention is not limited to these embodiments. In the description, left and right refer to left and right with respect to a passenger riding in a vehicle, and front and rear refer to front and rear with respect to a traveling direction of the vehicle. In the drawings, Up indicates up, and Dn indicates down.

### First Embodiment

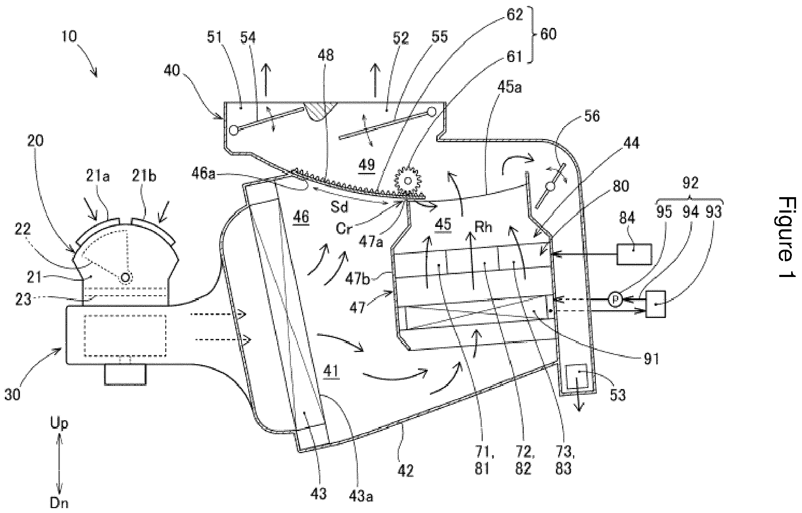

A vehicular air conditioner 10 according to a first embodiment will be described with reference to Figs. 1 to 5. As illustrated in Fig. 1, the vehicular air conditioner 10 can be mounted on a vehicle such as a passenger vehicle (not illustrated), and adjusts (conditions) a temperature of air in a vehicle interior. The vehicular air conditioner 10 includes an intake unit 20 (an inside-outside air switching unit 20) that switches between introducing outside air and inside air, a blower unit 30 that blows air introduced from the intake unit 20, and an interior air conditioning unit 40 that conditions air blown from the blower unit 30 and supplies the conditioned air to the vehicle interior.

The intake unit 20 includes an intake box 21, an intake door 22, and a filter 23. The intake box 21 includes an outside air introduction port 21a through which air (outside air) can be introduced from the outside of the vehicle interior, and an inside air introduction port 21b through which air (inside air) can be introduced from the inside of the vehicle interior. The intake door 22 switches between opening and closing of the outside air introduction port 21a and the inside air introduction port 21b. The filter 23 cleans air introduced from the outside air introduction port 21a and the inside air introduction port 21b.

The interior air conditioning unit 40 includes a housing 42 provided with an air flow path 41 inside, an evaporator 43 provided in the air flow path 41, a heater unit 44 provided downstream of the evaporator 43, a partition wall 47 that partitions the air flow path 41 into a heating flow path 45 and a cold air flow path 46, and a mixing door 48 disposed at a downstream distal end 47a (an edge 47a) of the partition wall 47.

The air flow path 41 of the housing 42 includes the heating flow path 45 and the cold air flow path 46 which are present downstream of the evaporator 43, and a mixing flow path 49 in which air flowing from the cold air flow path 46 and air flowing from the heating flow path 45 are mixed to become conditioned air.

The housing 42 includes at least three discharge portions (discharge ports) for blowing out conditioned air in the mixing flow path 49, that is, a defroster discharge portion 51, a vent discharge portion 52, and a foot discharge portion 53. The defroster discharge portion 51 can blow out conditioned air toward a windshield. The vent discharge portion 52 can blow out conditioned air toward an upper body of a passenger in a front seat. The foot discharge portion 53 can blow out conditioned air toward legs of the passenger in the front seat. The defroster discharge portion 51 can be opened and closed by a first door 54. The vent discharge portion 52 can be opened and closed by a second door 55. The foot discharge portion 53 can be opened and closed by a third door 56. Each of the doors 54 to 56 is implemented with, for example, a swing door (a butterfly door or a cantilever door).

The evaporator 43 is a cooling heat exchanger that cools air by heat exchange between air blown from the blower unit 30 and a refrigerant in a refrigeration cycle (including a heat pump system) (not illustrated).

The heater unit 44 is a heat source provided in the heating flow path 45. Details of the heater unit 44 will be described later.

The partition wall 47 is provided downstream of the evaporator 43, and partitions the air flow path 41 into the heating flow path 45 through which cold air from the evaporator 43 flows while being heated, and the cold air flow path 46 (the bypass passage 46) through which cold air from the evaporator 43 flows as it is.

The mixing door 48 has a configuration of a sliding door disposed at the downstream distal end 47a of the partition wall 47, and is capable of adjusting a ratio of a flow rate of air flowing through the cold air flow path 46 to a flow rate of air flowing through the heating flow path 45. That is, the mixing door 48 adjusts the ratio of air flowing toward the heating flow path 45 to air flowing toward the cold air flow path 46.

A positional relation of the heater unit 44, an outlet 45a of the heating flow path 45, an outlet 46a of the cold air flow path 46, and the partition wall 47 with respect to the evaporator 43 is preferably set as follows.

A wall surface 47b of the partition wall 47 faces an outflow surface 43a of the evaporator 43. For example, the wall surface 47b of the partition wall 47 is parallel (including substantially parallel) to the outflow surface 43a of the evaporator 43. The cold air flow path 46 is a space between the outflow surface 43a of the evaporator 43 and the wall surface 47b of the partition wall 47. The heating flow path 45 is a space opposite to the cold air flow path 46 with respect to the partition wall 47.

The outlet 45a of the heating flow path 45 and the outlet 46a of the cold air flow path 46 are positioned at the downstream distal end 47a of the partition wall 47. An opening degree of the outlet 45a of the heating flow path 45 and an opening degree of the outlet 46a of the cold air flow path 46 are changed by a sliding movement of the single mixing door 48. That is, the outlet 45a of the heating flow path 45 and the outlet 46a of the cold air flow path 46 are continuous in a sliding direction Sd of the mixing door 48 via the downstream distal end 47a of the partition wall 47.

In more detail, the outlet 45a of the heating flow path 45 and the outlet 46a of the cold air flow path 46 are, for example, continuous in the sliding direction Sd of the mixing door 48, and are formed in an arc shape protruding toward the heating flow path 45 and the cold air flow path 46. In accordance with this, the mixing door 48 is configured with a plate-shaped member curved in an arc shape in the sliding direction Sd.

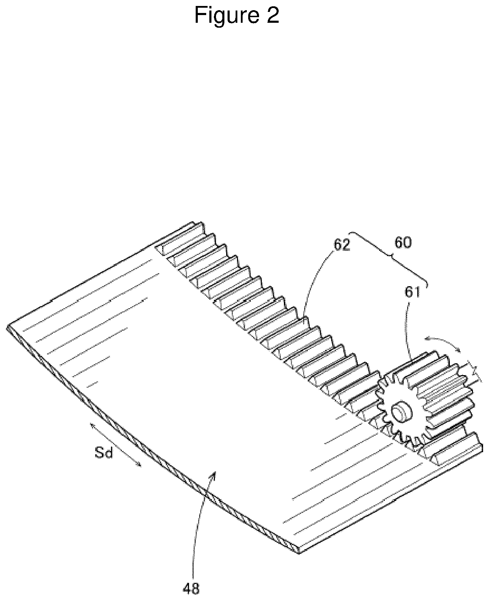

As illustrated in Fig. 2, the mixing door 48 is driven in the sliding direction Sd by a rack and pinion mechanism 60. The rack and pinion mechanism 60 includes a pinion 61 driven by a motor (not illustrated) and a rack 62 formed on a plate surface of the mixing door 48 in a manner of meshing with the pinion 61. The rack and pinion mechanism 60 is preferably positioned on a mixing flow path 49 side.

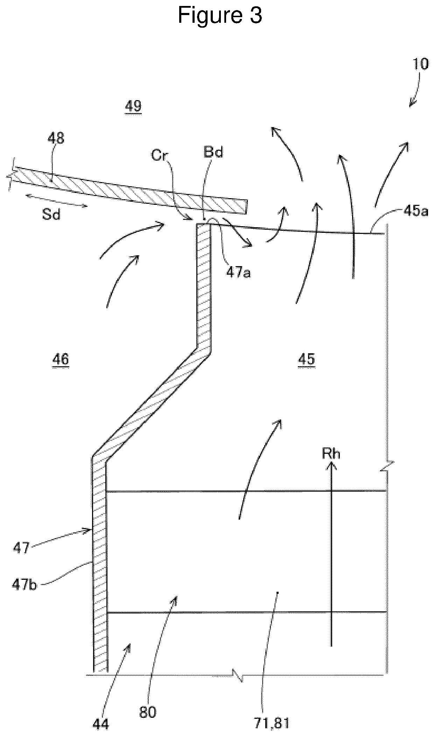

Next, the heater unit 44 will be described in detail. As illustrated in Fig. 3, in order for the mixing door 48 to smoothly slide along the outlet 45a of the heating flow path 45, a gap Cr is inevitably formed between the downstream distal end 47a (the edge 47a) of the partition wall 47 and the mixing door 48. In a state in which the cold air flow path 46 is fully closed by the mixing door 48, that is, in a so-called full-hot mode or a state close to the fully closed state, cold air flowing through the cold air flow path 46 flows into the outlet 45a of the heating flow path 45 through the gap Cr. In this state, a part of air heated by the heater unit 44 is cooled by cold air.

In particular, a decrease in a temperature of air closer to a position of the gap Cr is inevitably large. As a result, a temperature difference of air distributed from the heating flow path 45 to the discharge portions 51 to 53 (see Fig. 1) increases. For example, the defroster discharge portion 51 capable of blowing air toward the windshield is close to the position of the gap Cr. A temperature of air discharged from the defroster discharge portion 51 tends to be lower than temperatures of air discharged from the other discharge ports 52 and 53.

It is also conceivable to seal the gap Cr with a sealing member. This, however, increases sliding resistance of the mixing door 48, and causes a problem of abrasion of the sealing member, which leaves room for improvement.

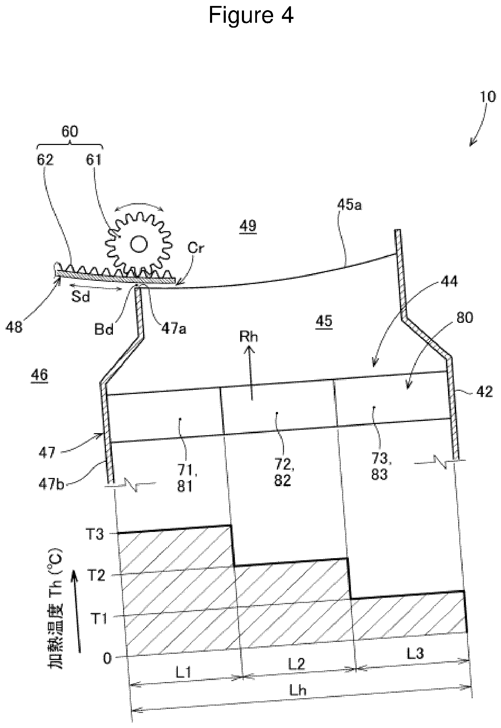

On the other hand, in the first embodiment, as illustrated in Fig. 4, a temperature distribution of the heater unit 44 is set with reference to a boundary Bd between the downstream distal end 47a (the edge 47a) of the partition wall 47 and the sliding mixing door 48. That is, the heater unit 44 is set to have a temperature distribution in which a heating temperature T3 of a portion 71 (a heating area 71) closer to the boundary Bd is higher than a heating temperature T1 of a portion 73 (a heating area 73) farther from the boundary Bd. Therefore, air heated by the heater unit 44 has a higher temperature near the boundary Bd between the downstream distal end 47a and the mixing door 48.

As an example, the heater unit 44 is divided into a plurality of (for example, three) heating areas 71 to 73. The plurality of heating areas 71 to 73 are arranged in a direction intersecting (preferably orthogonal to) a flow direction Rh of air flowing through the heating flow path 45. Among the plurality of heating areas 71 to 73, the portion 71 (the heating area 71) closest to the boundary Bd is defined as a first heating area 71, the portion 72 (the heating area 72) farther from the boundary Bd than the first heating area 71 is defined as a second heating area 72, and the portion 73 (the heating area 73) farther from the boundary Bd than the second heating area 72 is defined as a third heating area 73. The third heating area 73 is a portion farthest from the boundary Bd.

A length of the heater unit 44 in a direction crossing the heating flow path 45 with respect to the wall surface 47b of the partition wall 47 is defined as Lh. The length Lh corresponds to a length in a direction intersecting the flow direction Rh of air flowing through the heating flow path 45. For example, a length L1 of the first heating area 71, a length L2 of the second heating area 72, and a length L3 of the third heating area 73 are set to be the same (including substantially the same), but are not limited thereto.

A heating temperature Th (a heat generation temperature Th) of the first heating area 71 is set to T3, which is a highest temperature. A heating temperature Th (a heat generation temperature Th) of the third heating area 73 is set to T1, which is a lowest temperature. A heating temperature Th (a heat generation temperature Th) of the second heating area 72 is set to T2, which is between the low temperature T1 and the high temperature T3. As described above, it is preferable that the heating temperature Th (the heat generation temperature Th) of the heater unit 44 is set to become higher stepwise from a farther side to a closer side with respect to the boundary Bd.

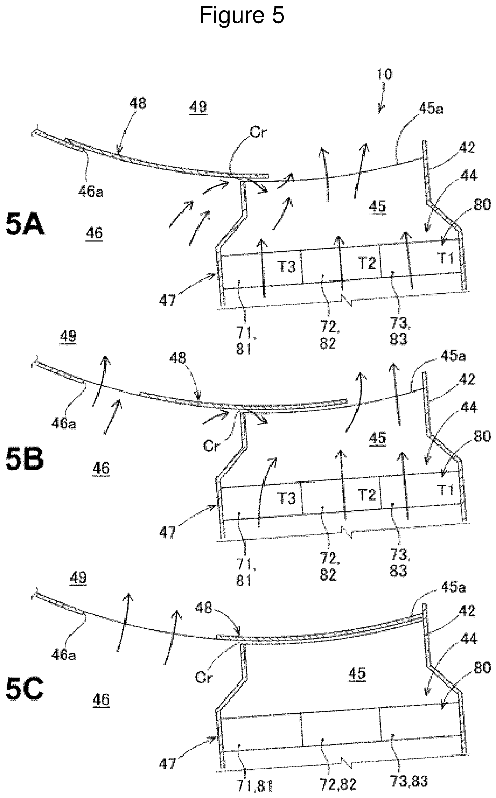

Next, an action of air flowing through the flow paths 45 and 46 will be described according to an opening degree of the mixing door 48. Fig. 5A illustrates the state in which the cold air flow path 46 is fully closed by the mixing door 48, that is, the so-called full-hot mode state or the state close to the fully closed state. In the heater unit 44, the heating temperature T3 of the first heating area 71 is higher than the heating temperatures T1 and T2 of the other heating areas 72 and 73. Therefore, even if cold air in the cold air flow path 46 flows into the heating flow path 45 through the gap Cr, the cold air is mixed with air heated to a higher temperature by the first heating area 71. The temperature difference of air supplied from the heating flow path 45 to the discharge portions 51 to 53 (see Fig. 1) is reduced.

Fig. 5B illustrates a state in which the heating flow path 45 is half-opened by the mixing door 48, that is, a so-called half-mode state. In this case, air flows from both the outlet 45a of the heating flow path 45 and the outlet 46a of the cold air flow path 46 to the mixing flow path 49. In this case, cold air in the cold air flow path 46 may flow into the heating flow path 45 through the gap Cr (the boundary Bd illustrated in Fig. 3) having a large passage resistance. At this time as well, as in the full-hot mode, cold air is mixed with air heated to a higher temperature by the first heating area 71. The temperature difference of air supplied from the heating flow path 45 to the discharge portions 51 to 53 (see Fig. 1) is reduced.

Fig. 5C illustrates a state in which the heating flow path 45 is fully closed by the mixing door 48 or a state close to the fully closed state, that is, a so-called full-cool mode state. In this case, cold air in the cold air flow path 46 flows from the outlet 46a of the cold air flow path 46 to the mixing flow path 49.

As is clear from the above description, in the state in which the cold air flow path 46 is fully closed by the mixing door 48 illustrated in Fig. 4, that is, in the so-called full-hot mode state or the state close to the fully closed state, even if cold air in the cold air flow path 46 flows into the heating flow path 45 through the gap Cr between the downstream distal end 47a of the partition wall 47 and the mixing door 48, the cold air is mixed with air heated to a higher temperature. As a result, the temperature difference of air supplied from the heating flow path 45 to the discharge portions 51 to 53 (see Fig. 1) can be made as small as possible. Since a temperature irregularity of air distributed from the outlet 45a of the heating flow path 45 to the discharge portions 51 to 53 can be eliminated, comfort of the passenger in the vehicle interior can be enhanced.

Therefore, in the vehicular air conditioner 10 including the sliding mixing door 48 illustrated in Fig. 1, the temperature irregularity of air distributed from the outlet 45a of the heating flow path 45 to the discharge ports 51 to 53 can be eliminated.

As illustrated in Figs. 1 and 4, the heater unit 44 includes a PTC heater 80. The PTC heater 80 includes a PTC element (a positive temperature coefficient thermistor element), and is an electric heater that heats air by generating heat when electric power is supplied to the PTC element. As described above, the PTC heater 80 has a PTC characteristic in which an electric resistance value changes with a positive coefficient as the heat generation temperature increases.

The PTC heater 80 includes a first PTC heater 81 provided in the first heating area 71, a second PTC heater 82 provided in the second heating area 72, and a third PTC heater 83 provided in the third heating area 73.

A heating temperature Th (a heat generation temperature Th) of the first PTC heater 81 is set to T3, which is a highest temperature. A heating temperature Th (a heat generation temperature Th) of the second PTC heater 82 is set to T2, which is between a low temperature T1 and the high temperature T3. A heating temperature Th (a heat generation temperature Th) of the third PTC heater 83 is set to T1, which is a lowest temperature. As a result, heating characteristics of the PTC heater 80 as a whole are self-controlled.

As described above, the PTC heater 80 is adopted, which has particularly stable temperature characteristics among electric heaters, and the PTC heater 80 is divided into the heating areas 71, 72, and 73. With this configuration, an optimal temperature distribution for the heating areas 71, 72, and 73 can be easily set. The PTC heater 80 is controlled by a controller 84.

As illustrated in Fig. 1, the heater unit 44 preferably includes, in addition to the PTC heater 80, a warm water heater 91 to which warm water is supplied. The warm water heater 91 is positioned upstream of the PTC heater 80 in the flow direction Rh of air passing through the heater unit 44.

The warm water heater 91 is a heating heat exchanger that heats air that has passed through the evaporator 43 with warm water. A warm water supply source 92 is connected to the warm water heater 91. The warm water supply source 92 supplies, for example, warm cooling water (warm water) that has cooled an engine 93 that outputs a driving force for driving the vehicle. The warm water supply source 92 includes a water cooling jacket (not illustrated) of the engine 93, a cooling water flow path 94 through which cooling water circulates between the water cooling jacket and the warm water heater 91, and a water pump 95 provided in the cooling water flow path 94. The warm water heater 91 can heat air that has passed through the evaporator 43 by exchanging heat between warm cooling water (warm water) that has cooled the engine 93 and the air that has passed through the evaporator 43.

By adding the warm water heater 91, which is normally mounted on the vehicle, to the heater unit 44, basic heating of air can be performed, and more detailed temperature management can be performed by the PTC heater 80.

### Second Embodiment

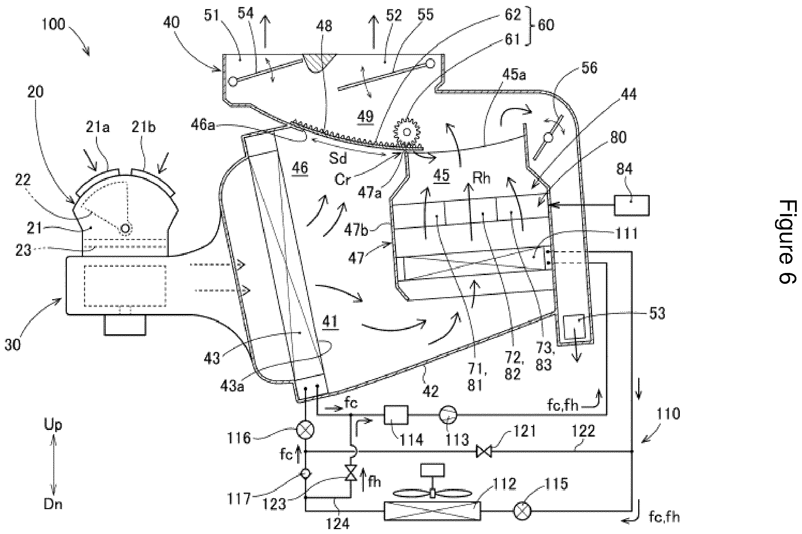

A vehicular air conditioner 100 according to a second embodiment will be described with reference to Fig. 6. Fig. 6 corresponds to Fig. 1.

The heater unit 44 of the vehicular air conditioner 100 according to the second embodiment includes an inner condenser 111 in a heat pump system 110 mounted on a vehicle, in addition to the PTC heater 80. Other basic configurations are the same as those of the vehicular air conditioner 10 according to the first embodiment. Parts common to those of the vehicular air conditioner 10 according to the first embodiment will be denoted by the same reference numerals, and detailed description thereof will be omitted.

As illustrated in Fig. 6, the inner condenser 111 is provided instead of the warm water heater 91 according to the first embodiment illustrated in Fig. 1. The inner condenser 111 is positioned upstream of the PTC heater 80 in the flow direction Rh of air passing through the heater unit 44.

The heat pump system 110 has a generally known configuration, and an example will be described. There are various types of heat pump systems 110, and the heat pump system 110 is not limited to the following configuration example.

The heat pump system 110 includes the evaporator 43, the inner condenser 111, a vehicle exterior heat exchanger 112, a compressor 113, an accumulator 114, a first expansion valve 115, a second expansion valve 116, and a check valve 117. The heat pump system 110 further includes a first bypass flow path 122 that can be opened and closed by a first control valve 121, and a second bypass flow path 124 that can be opened and closed by a second control valve 123.

When an operation mode of the vehicular air conditioner 100 is set to a cooling operation mode, the vehicular air conditioner 100 enters a full-cool mode state in which the heating flow path 45 is fully closed by the mixing door 48. In addition, the first expansion valve 115 is fully opened, the second expansion valve 116 is throttled, and the first control valve 121 and the second control valve 123 are closed.

In the cooling operation mode, a refrigerant flows as indicated by an arrow fc. The high-temperature, highpressure refrigerant discharged from the compressor 113 passes through the inner condenser 111 without dissipating heat by the inner condenser 111, passes through the first expansion valve 115 in the fully open state, enters the vehicle exterior heat exchanger 112, and dissipates heat (condenses and liquefies). The refrigerant that has dissipated heat by the vehicle exterior heat exchanger 112 passes through the check valve 117, decompressed by the second expansion valve 116, and enters the evaporator 43. The refrigerant, whose heat is absorbed (evaporated and vaporized) by the evaporator 43, returns to the compressor 113 through the accumulator 114.

Therefore, air blown from the blower unit 30 is cooled by the evaporator 43, bypasses the heater unit 44, and flows as cold air from the outlet 46a of the cold air flow path 46 to the mixing flow path 49.

When the operation mode of the vehicular air conditioner 100 is set to a heating operation mode, the vehicular air conditioner 100 enters a full-hot mode state in which the cold air flow path 46 is fully closed by the mixing door 48. In addition, the first expansion valve 115 is throttled, the second expansion valve 116 is closed, the first control valve 121 is closed, and the second control valve 123 is opened.

In the heating operation mode, the refrigerant flows as indicated by an arrow fh. The high-temperature, highpressure refrigerant discharged from the compressor 113 dissipates heat (condenses and liquefies) by the inner condenser 111, decompressed by the first expansion valve 115, enters the vehicle exterior heat exchanger 112, and dissipates heat (condenses and liquefies). The refrigerant that has dissipated heat by the vehicle exterior heat exchanger 112 passes through the second bypass flow path 124 via the second control valve 123 and the accumulator 114, and returns to the compressor 113.

Therefore, air blown from the blower unit 30 is heated by the inner condenser 111 and flows from the outlet 45a of the heating flow path 45 to the mixing flow path 49.

By adding the inner condenser 111 in the heat pump system 110 to the heater unit 44, basic heating of air can be performed, and more detailed temperature management can be performed by the PTC heater 80.

In addition to effects of the second embodiment, the vehicular air conditioner 100 according to the second embodiment can achieve the same effects as those of the vehicular air conditioner 10 according to the first embodiment.

As is clear from the above description, the heater unit 44 includes, in addition to the PTC heater 80, either one of the warm water heater 91 to which warm water is supplied as illustrated in Fig. 1 and the inner condenser 111 in the heat pump system 110 as illustrated in Fig. 6.

### Third Embodiment

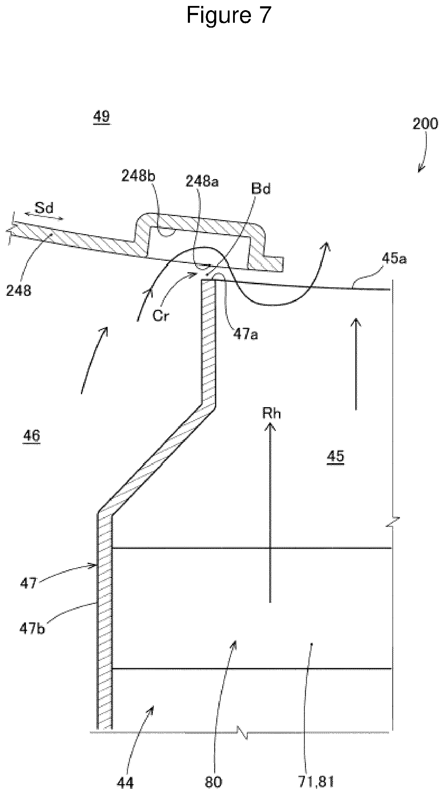

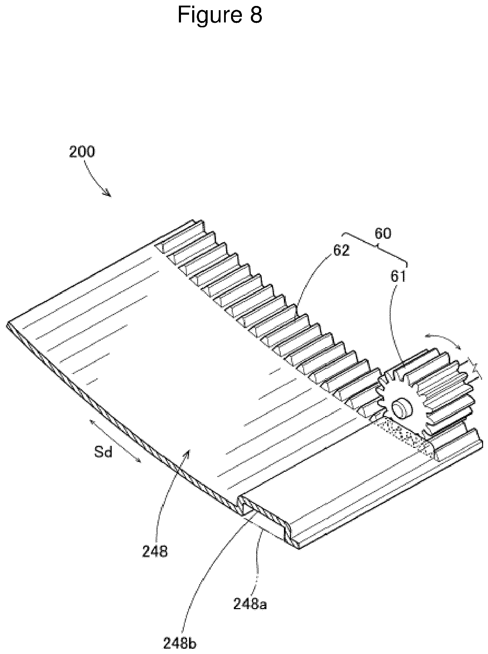

A vehicular air conditioner 200 according to a third embodiment will be described with reference to Figs. 7 to 9. Fig. 7 corresponds to Fig. 3. Fig. 8 corresponds to Fig. 2.

In the vehicular air conditioner 200 according to the third embodiment, the mixing door 48 in the first embodiment illustrated in Figs. 2 and 3 is changed to a mixing door 248 illustrated in Figs. 7 and 8. Other basic configurations are the same as those of the vehicular air conditioner 10 according to the first embodiment. Parts common to those of the vehicular air conditioner 10 according to the first embodiment will be denoted by the same reference numerals, and detailed description thereof will be omitted.

The mixing door 248 includes, in a portion 248a facing the downstream distal end 47a (the edge 47a) of the partition wall 47 in a state in which the heating flow path 45 is fully opened or half-opened, a ventilation introduction recess 248b that is recessed toward a side opposite to the downstream distal end 47a (toward the mixing flow path 49) and is capable of introducing cold air from the cold air flow path 46 to the outlet 45a of the heating flow path 45.

The ventilation introduction recess 248b is formed in a long groove shape along the downstream distal end 47a of the partition wall 47 (along a front and back direction of the paper of Fig. 7). A cross-sectional shape of the ventilation introduction recess 248b is a rectangular cross-sectional shape illustrated in Fig. 7. When the mixing door 248 fully opens or half-opens the heating flow path 45, the ventilation introduction recess 248b allows the heating flow path 45 and the cold air flow path 46 to communicate with each other. Accordingly, the gap Cr can be set to be large.

In general, in a full-hot mode, air flows only through the heating flow path 45, and thus ventilation resistance thereof is relatively large. Even in this case, it is preferable that a larger amount of warm air can be discharged from the discharge portions 51 to 53 (see Fig. 1) into a vehicle interior in order to improve comfort in the vehicle interior. For this purpose, it is preferable to increase the amount of air distributed from the outlet 45a of the heating flow path 45 to the discharge portions 51 to 53.

To address this issue, in the third embodiment, it is considered to increase the amount of air distributed from the outlet 45a of the heating flow path 45 to the discharge portions 51 to 53. By providing the ventilation introduction recess 248b, the gap Cr between the downstream distal end 47a of the partition wall 47 and the mixing door 248 is actively increased. That is, the gap Cr increases by a depth of the ventilation introduction recess 248b. As a result, the ventilation resistance for air flowing through the cold air flow path 46 to pass through the gap Cr between the downstream distal end 47a of the partition wall 47 and the mixing door 248 can be reduced. The amount of air flowing through the heating flow path 45 can be compensated by the amount of air passing through the gap Cr.

In this case, since the amount of air passing through the gap Cr increases, the heater unit 44 is set to have a temperature distribution in which the heating temperature T3 of the portion 71 closer to the boundary Bd between the downstream distal end 47a of the partition wall 47 and the sliding mixing door 248 is even higher than the heating temperatures T2 and T1 of portions 72 and 73 farther from the boundary Bd.

Therefore, it is possible to increase the amount of air distributed from the outlet 45a of the heating flow path 45 to the discharge portions 51 to 53 while making a temperature difference of air supplied from the heating flow path 45 to the discharge portions 51 to 53 as small as possible.

In addition to effects of the third embodiment, the vehicular air conditioner 200 according to the third embodiment can achieve the same effects as those of the vehicular air conditioner 10 according to the first embodiment and the vehicular air conditioner 100 according to the second embodiment.

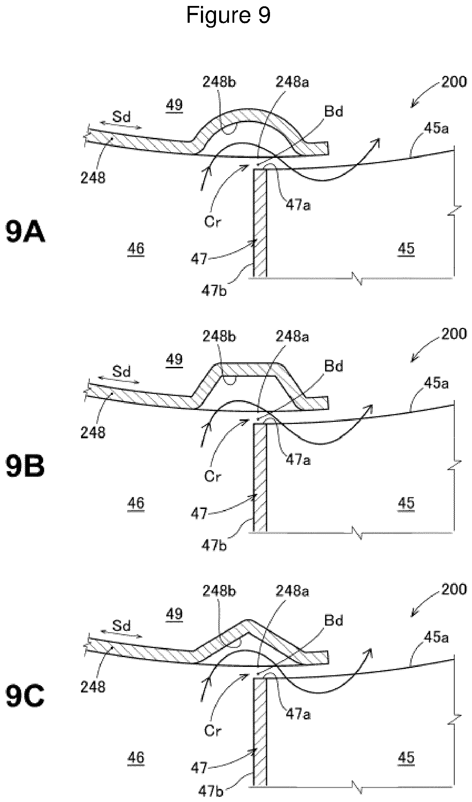

The cross-sectional shape of the ventilation introduction recess 248b is not limited to the rectangular cross-sectional shape, and may be any cross-sectional shape as long as the gap Cr between the downstream distal end 47a of the partition wall 47 and the mixing door 248 can be actively increased. For example, the cross-sectional shape of the ventilation introduction recess 248b may be an arc-shaped cross-section illustrated in Fig. 9A, a trapezoidal cross-section illustrated in Fig. 9B, or a tapered cross-section illustrated in Fig. 9C.

### Fourth Embodiment

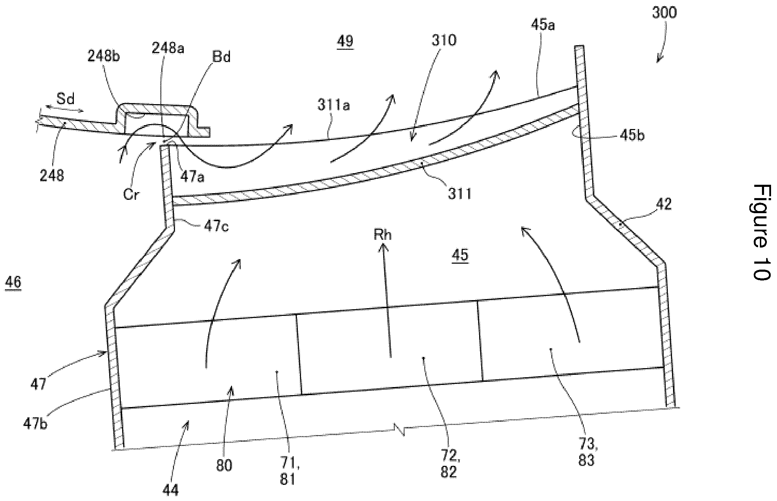

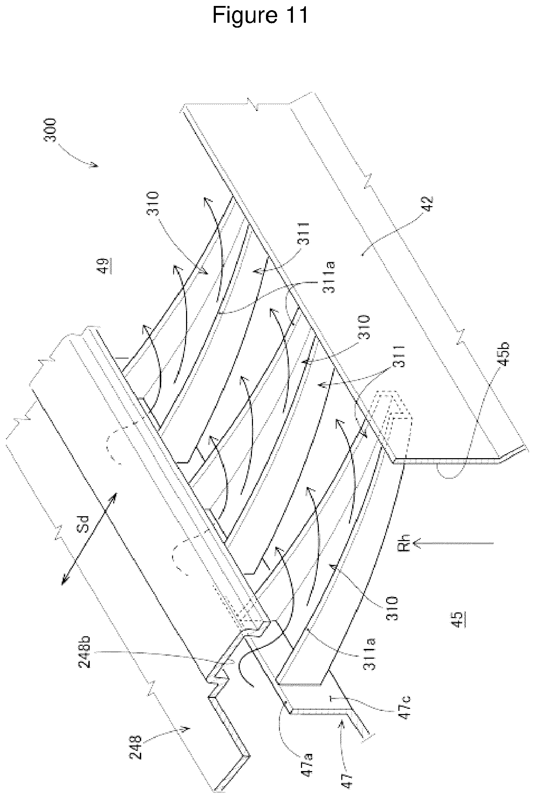

A vehicular air conditioner 300 according to a fourth embodiment will be described with reference to Figs. 10 and 11. Fig. 10 corresponds to Fig. 7.

The vehicular air conditioner 300 according to the fourth embodiment includes a cold air guide path 310 at the outlet 45a of the heating flow path 45 according to the third embodiment illustrated in Fig. 7. Other basic configurations are the same as those of the vehicular air conditioner 200 according to the third embodiment. Parts common to those of the vehicular air conditioner 200 according to the third embodiment will be denoted by the same reference numerals, and detailed description thereof will be omitted.

The vehicular air conditioner 300 includes at least one cold air guide path 310 that extends from the downstream distal end 47a of the partition wall 47 toward an end 45b (an end surface 45b) of the outlet 45a of the heating flow path 45 opposite to the downstream distal end 47a and guides cold air, flowing through the boundary Bd into the cold air guide path 310, to the end 45b opposite to the downstream distal end 47a. The cold air guide path 310 is open toward a downstream side of the heating flow path 45.

Fig. 11 illustrates a case in which a plurality of cold air guide paths 310 are arranged at regular intervals along the downstream distal end 47a of the partition wall 47. As illustrated in Figs. 10 and 11, the plurality of cold air guide paths 310 are capable of guiding cold air, flowing from the cold air flow path 46 through the ventilation introduction recess 248b into the cold air guide path 310, to the end 45b on the opposite side.

Each of the cold air guide paths 310 is formed by a guide frame body 311 having a U-shaped cross section that opens toward the downstream side of the heating flow path 45 (opens in the flow direction Rh of air flowing through the heating flow path 45). Both ends of each guide frame body 311 extend from the downstream distal end 47a of the wall surface 47c of the partition wall 47 (the wall surface 47c on a heating flow path 45 side) to the end 45b on the opposite side (the end surface 45b). An open end surface 311a of the guide frame body 311 extends along an outline of the outlet 45a of the heating flow path 45.

Air (cold air) in the cold air flow path 46 flows from the cold air flow path 46 into the outlet 45a of the heating flow path 45 and the cold air guide path 310 through the ventilation introduction recess 248b. Therefore, ventilation resistance for air flowing through the cold air flow path 46 to pass through the gap Cr between the downstream distal end 47a of the partition wall 47 and the mixing door 48 can be reduced. The amount of air flowing through the heating flow path 45 can be compensated by the amount of air passing through the gap Cr.

In addition, air flowing into the cold air guide path 310 flows into the mixing flow path 49 while being guided by the cold air guide path 310 toward the end 45b (the end surface 45b) opposite to the downstream distal end 47a. That is, air flowing into the cold air guide path 310 from the ventilation introduction recess 248b can be dispersed to the entire outlet 45a of the heating flow path 45 by the cold air guide path 310. Therefore, a temperature distribution of the heater unit 44 can be set to be gentle. A temperature irregularity of air flowing from the outlet 45a of the heating flow path 45 to the mixing flow path 49 can be prevented.

In this way, since the cold air guide path 310 is provided, the vehicular air conditioner 300 can further increase the amount of air flowing from the cold air flow path 46 to the outlet 45a of the heating flow path 45. Therefore, it is possible to further increase the amount of air distributed from the outlet 45a of the heating flow path 45 to the discharge portions 51 to 53 while making a temperature difference of air supplied from the heating flow path 45 to the discharge portions 51 to 53 as small as possible.

The vehicular air conditioner 300 according to the fourth embodiment can further achieve the same effects as those of the vehicular air conditioner 200 according to the third embodiment.

The invention is not limited to the embodiments as long as operations and effects of the invention are achieved.

For example, any two or more of the vehicular air conditioners 10, 100, 200, and 300 according to the embodiments may be combined.

The vehicular air conditioners 10, 100, 200, and 300 according to the embodiments may be configurations in which the ratio of air flowing toward the heating flow path 45 to air flowing toward the cold air flow path 46 can be adjusted by the sliding mixing doors 48 and 248 disposed at the downstream distal end 47a of the partition wall 47.

The sliding mixing doors 48 and 248 are not limited to the curved configuration, and may be, for example, flat plate-shaped members.

The vehicular air conditioners 10 and 100 to 300 of the invention are suitable for being mounted on a vehicle such as a passenger vehicle.

### Description of Reference Numerals and Signs

10, 100 to 300: vehicular air conditioner
41: air flow path
42: housing
43: evaporator
44: heater unit
45: heating flow path
45a: outlet of heating flow path
45b: end opposite to downstream distal end
46: cold air flow path
46a: outlet of cold air flow path
47: partition wall
47a: downstream distal end
48: mixing door
51: defroster discharge portion
52: vent discharge portion
53: foot discharge portion
71: first heating area
72: second heating area
73: third heating area
80: PTC heater
81: first PTC heater
82: second PTC heater
83: third PTC heater
91: warm water heater
110: heat pump system
111: inner condenser
248: mixing door
248a: portion facing downstream distal end of partition wall
248b: ventilation introduction recess
310: cold air guide path
Bd: boundary
Cr: gap
T1: heating temperature of farther portion
T2, T3: heating temperature of closer portion

## Claims

1. A vehicular air conditioner (10; 100; 200; 300), comprising:
a housing (42) provided with an air flow path (41) inside;
an evaporator (43) provided in the air flow path (41) ;
a heater unit (44) provided downstream of the evaporator (43);
a partition wall (47) that partitions the air flow path (41) into a heating flow path (45) including the heater unit (44) and a cold air flow path (46) bypassing the heater unit (44); and
a mixing door (48, 248) having a configuration of a sliding door disposed at a downstream distal end (47a) of the partition wall (47), the mixing door (48, 248) being configured to adjust a ratio of air flowing toward the heating flow path (45) to air flowing toward the cold air flow path (46), wherein
the heater unit (44) is set to have a temperature distribution in which a heating temperature (T3) of a portion (71) closer to a boundary (Bd) between the downstream distal end (47a) of the partition wall (47) and the mixing door (48, 248) is higher than a heating temperature (T1, T2) of a portion (72, 73) farther from the boundary (Bd).

2. The vehicular air conditioner according to claim 1, further comprising:
at least one cold air guide path (310) extending from the downstream distal end (47a) of the partition wall (47) toward an end (45b) of an outlet (45a) of the heating flow path (45) opposite to the downstream distal end (47a), the cold air guide path (310) being configured to guide cold air, flowing through the boundary (Bd) into the cold air guide path (310), to the end (45b) opposite to the downstream distal end (47a), wherein
the cold air guide path (310) is open toward a downstream side of the heating flow path (45).
